## Europäisches Patentamt
## European Patent Office
## Office européen des brevets

(19)

(11) Publication number: **0 032 370**
A2

(12)

# EUROPEAN PATENT APPLICATION

(21) Application number: **81100013.2**

(22) Date of filing: **05.01.81**

(51) Int. Cl.³: **B 60 K 17/22**

(30) Priority: **10.01.80 JP 1388/80 U**

(43) Date of publication of application:
**22.07.81 Bulletin 81/29**

(84) Designated Contracting States:
**DE FR GB**

(71) Applicant: **NISSAN MOTOR COMPANY, LIMITED**
No.2, Takara-cho, Kanagawa-ku
Yokohama-shi Kanagawa-ken(JP)

(72) Inventor: **Shimizu, Toshihiko**
No. 3-1-10-506, Tsujidonishikaigan
Fujisawa City(JP)

(72) Inventor: **Yoshimori, Keisuke**
No- 1079, Shirane-cho Asahi-ku
Yokohama City(JP)

(74) Representative: **Patentanwälte Dipl.-Ing. A. Grünecker,**
**Dr.-Ing. H. Kinkeldey, Dr.-Ing. W. Stockmair,**
**Dr. rer. nat. K. Schumann, Dipl.-Ing. P.H. Jakob, Dr. rer.**
**nat. G. Bezold Maximilianstrasse 43**
**D-8000 München 22(DE)**

(54) An improved drive shaft for a vehicle or the like.

(57) A drive shaft (16,26) is fitted with a snugly fitting sleeve (25) so that upon one of the drive shaft and the sleeve tending to resonate, the other remains stationary relative thereto to produce friction which converts the vibration into heat or the like.

./...

Croydon Printing Company Ltd.

# FIG.1

## AN IMPROVED DRIVE SHAFT FOR A VEHICLE OR THE LIKE

### BACKGROUND OF THE INVENTION

#### 1. Field of the Invention

The present invention relates generally to a drive shaft and more particularly to an improved drive shaft which is extremely resistant to large amplitude vibration.

#### 2. Description of the Prior Art

In known drive shaft arrangements in order to suppress noise and vibration emanating from a drive shaft or shafts (hollow or solid) such as used to interconnect the final drive gear of a vehicle and a traction wheel or wheels, it has been necessary to either increase or decrease the diameter of same either above or below a given desired value to avoid the shaft having vibrational characteristics whereby the shaft is apt to vibrate at its resonant frequency during often used vehicle speeds.

### SUMMARY OF THE INVENTION

The present invention features a drive shaft having a vibration damper in the form of a sleeve which is snugly disposed on said shaft. Due to the different diameters, configurations and/or materials of the shaft and the damper, they have different resonant frequencies,

- -

and as one tends to undergo large amplitude vibration or resonate, the other tends to remain stationary with respect to the first so that the relative movement therebetween causes sliding friction to convert the vibrational energy into a different form and accordingly damp the vibration. In the case of a hollow drive shaft the damper may be disposed inside the shaft to reduce the overall diameter of same.

BRIEF DESCRIPTION OF THE DRAWINGS

The features and advantages of the arrangement of the present invention will become more clearly appreciated from the following description taken in conjuction with the accompanying drawings in which like reference numerals denote corresponding elements, and in which

Fig. 1 is a partially sectional elevation view of a stub axle type drive shaft according to a first embodiment of the present invention which drivingly interconnects a final reduction gearing and a traction wheel of an automotive vehicle;

Fig. 2 is a sectional view taken along section line A-A of Fig.1;

Fig. 3 is a sectional view taken along section line A-A of Fig. 1 showing a variation of the first embodiment;

Fig. 4 is a partially sectional view similar to that of Fig. 1 which shows a second embodiment of the present invention;

Fig. 5 is a sectional view taken along section line B-B of Fig. 4; and

Fig. 6 is a sectional view taken along section line A-A of Fig. 4 showing a variation of the second embodiment.

DETAILED DESCRIPTION OF THE PREFERRED EMBODIMENTS

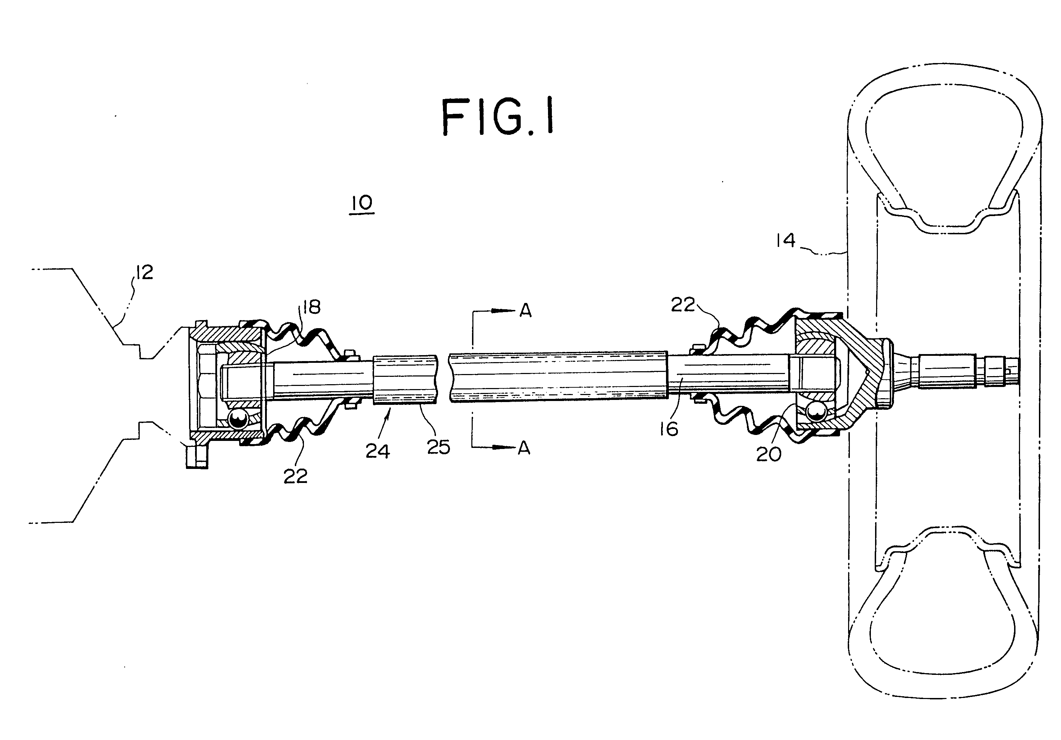

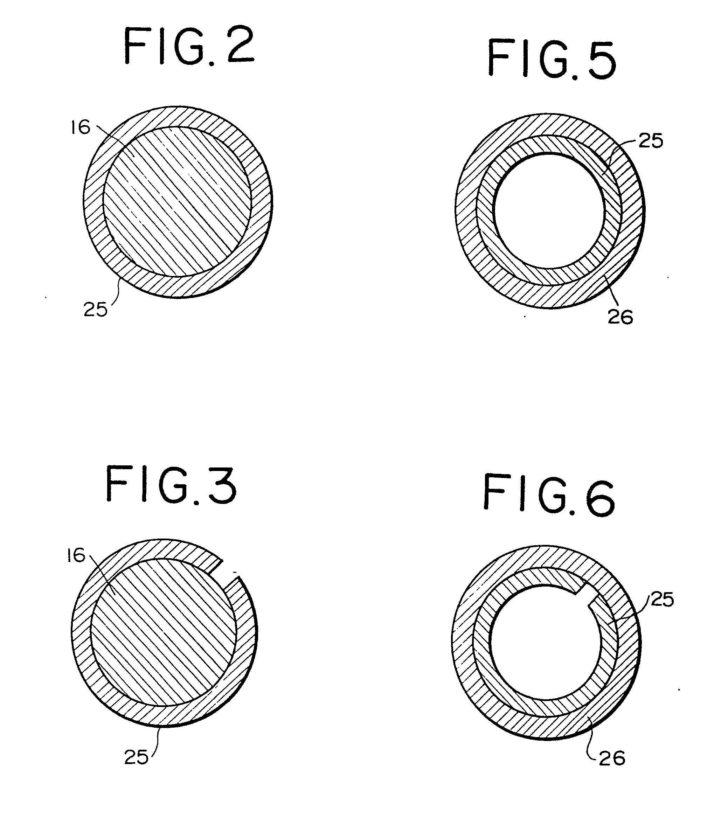

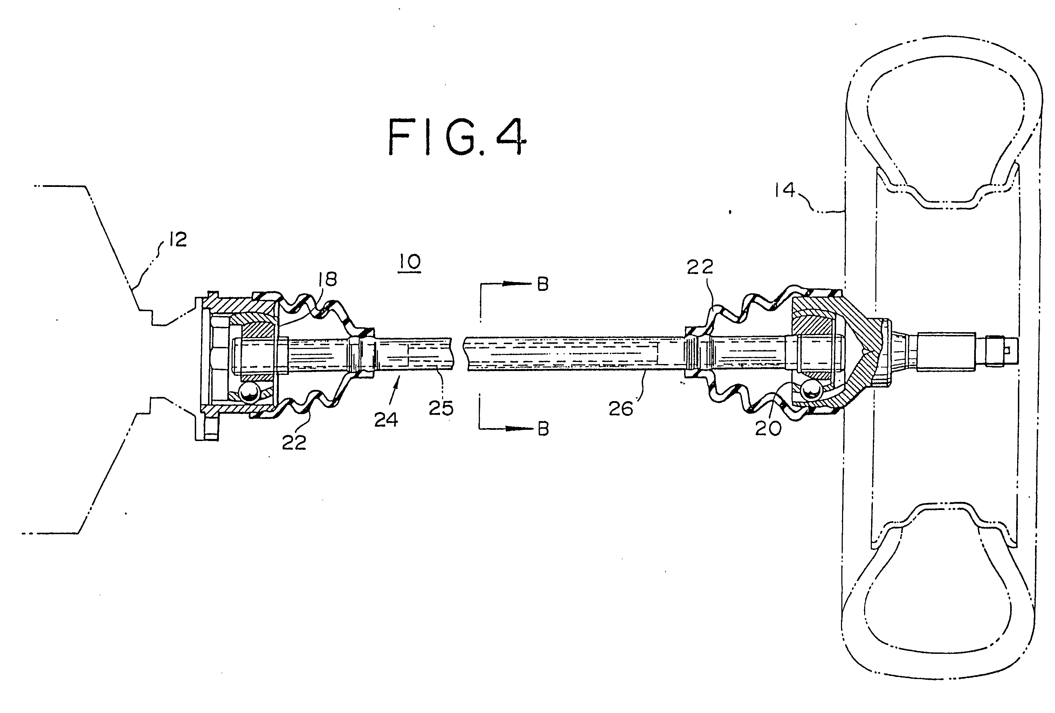

Turning now to the drawings and more specifically Figs. 1 and 2, a first embodiment of the present invention is shown. As shown in Fig. 1, a drive shaft arrangement 10, which in this case takes the form of a stub axle, drivingly interconnects a final reduction or differential gear 12 (driving member) with a traction wheel 14 (driven member). The drive shaft arrangement 10 comprises a drive shaft proper 16 drivingly connected to the final reduction gear 12 through a constant velocity univeral joint 18 at one end thereof and to the traction wheel 14 by a constant velocity universal joint 20 at the other end thereof. Elastomeric covers 22 sealingly enclose the univeral joints 18 and 20 to prevent soiling of same. The drive shaft arrangement further comprises a vibration damper 24 which takes the form of a sleeve 25 snugly disposed on the outer surface of the drive shaft 16. The drive shaft 16 and the sleeve 25 are arranged to have different resonant frequencies so that upon one tending to resonate, the other tends to remain stationary relative thereto so that the friction created therebetween converts the vibrational energy into different forms of energy such as heat.

Fig. 3 shows a variation of the first embodiment. In this arrangement the sleeve 25 is formed with a longitudinally extending slot which endows springy characteristics on the sleeve and permits same to resiliently grip the outer surface of the drive shaft and to be accordingly readily fitted thereto during production.

Fig. 4 shows a second embodiment of the present invention. In this case a hollow drive shaft 26 is used in place of the solid one of the first embodiment. With this arrangement it is preferred to dispose the damper 24 within the drive shaft for the sake of enclosing the damper and minimizing the maximum outer diameter of the shaft.

Fig. 6 depicts a variation of the second embodiment wherein the sleeve 25 defining the damper is slotted to permit same to be compressed slightly during insertion into the drive shaft with the consequence that the sleeve 25 thereafter snugly grips the inner surface of the drive shaft.

The operation of the second embodiment is, of course, identical with that of the first and as such requires no further discussion.

Hence, in summary, the present invention features a drive shaft, which can be either solid or hollow and a sleeve fitted on or in the drive shaft. The drive shaft and the sleeve have different resonant frequencies so that upon one tending to resonate, the other tends to remain stationary with respect thereto, inducing rubbing or frictional interaction between the shaft and sleeve which converts vibrational energy into heat, etc.

Hence, with the present invention, it is possible to avoid overly large or small diameter drive shafts and produce a drive shaft which does not unwantedly vibrate and/or produce noise during normal vehicle operation.

WHAT IS CLAIMED IS:

1.    A drive system for transmitting rotational energy from a driving member to a driven member comprising:

a drive shaft (16,26) operatively connected at one end to said driving member and at the other end to said driven member; and

a damper (24) disposed with said drive shaft and having a resonant frequency different from said drive shaft for damping the vibration of said drive shaft.

2.    A drive system as claimed in claim 1 wherein said damper (24) comprises a sleeve (25) snugly fitted on a surface of said drive shaft (16,26) and which tends to remain stationary relative thereto upon said drive shaft tending to resonate so that the friction produced therebetween converts the vibration into different forms of energy.

3.    A drive system as claimed in claim 2, wherein said drive shaft (16) is solid and said sleeve (25) is disposed on the outer surface thereof.

4.    A drive system as claimed in claim 2 wherein said drive shaft (26) is hollow and said sleeve (25) is disposed inside said drive shaft so as to contact the inner surface thereof.

5.  A drive system as claimed in claims 3 or 4 wherein said sleeve is longitudinally slotted.

# FIG.I

10

12

18

22 A

22

A

24 25 A A

22

16 14

20

1/3

0032370

# FIG.2

# FIG.5

# FIG.3

# FIG.6

# FIG.4